# EUROPÄISCHE PATENTSCHRIFT

(11) **EP 4 433 725 B1**
(45) Veröffentlichungstag und Bekanntmachung des Hinweises auf die Patenterteilung: **03.09.2025**
(21) Anmeldenummer: 22801466.8
(22) Anmeldetag: 13.10.2022
(51) Int. Cl.: F16H 57/04, B60K 1/00, F16H 57/02, B60K 11/02, H02K 9/19, H02K 7/116, H02K 5/20

(54) **ANTRIEBSVORRICHTUNG FÜR EINE ELEKTRIFIZIERTE FAHRZEUGACHSE**
DRIVE DEVICE FOR AN ELECTRIFIED VEHICLE AXLE
DISPOSITIF D'ENTRAÎNEMENT POUR ESSIEU ÉLECTRIFIÉ DE VÉHICULE

(30) Priorität: 18.11.2021 DE 102021130151
(43) Veröffentlichungstag der Anmeldung: 25.09.2024
(73) Patentinhaber: Audi AG, 85045 Ingolstadt (DE)
(72) Erfinder: SZÉNÁSI, László Zoltán, 9025 Gyor (HU); SZÉKELY, Béla, 9012 Györ (HU)
(86) Internationale Anmeldenummer: PCT/EP2022/078480
(87) Internationale Veröffentlichungsnummer: WO 2023/088616

(56) Entgegenhaltungen:
- DE-A1- 102020 125 112
- US-A1- 2013 019 707
- US-A1- 2013 145 879
- US-A1- 2022 286 011

## Beschreibung

Die Erfindung betrifft eine Antriebsvorrichtung für eine elektrifizierte Fahrzeugachse eines Fahrzeugs nach dem Oberbegriff des Anspruches 1.

Eine elektrifizierte Fahrzeugachse eines zweispurigen, elektrisch betriebenen Fahrzeugs weist eine Elektromaschine auf, die über ein Getriebe auf Antriebswellen abtreibt, die zu Fahrzeugrädern der Fahrzeugachse geführt sind. Zudem weist die Fahrzeugachse ein Ölversorgungssystem mit einem Ölmodul auf, das die Elektromaschine und das Getriebe mit Öl versorgt.

In einer beispielhaften Antriebsvorrichtung ist das Ölmodul, die Elektromaschine und das Getriebe zu einer Baueinheit zusammengefügt. In der Baueinheit ist das Ölmodul an einer Fügeebene an das Getriebe geflanscht. Ferner versorgt das Ölmodul über Versorgungsleitungen sowohl das Getriebe als auch die Elektromaschine mit Öl. Das Öl wird von der Elektromaschine sowie vom Getriebe über Rückführleitungen wieder zurück zum Ölmodul geführt.

Im Stand der Technik sind die Versorgungsleitungen sowie die Rückführleitungen als separate Leitungselemente im Ölversorgungssystem in bauteilaufwendiger Weise verbaut.

Aus der DE 10 2010 041 415 A1 ist eine in Verbundbauweise hergestellte Baueinheit eines Getriebegehäuses bekannt. Aus der DE 103 05 781 B4 ist eine mehrstufige Schmierölpumpe bekannt. Aus der DE 101 43 929 A1 ist eine Getriebesteuervorrichtung bekannt.

Die US 2013/145879 A1 offenbart eine gattungsgemäße Antriebsvorrichtung. Aus der US 2013/019707 A1 ist ein elektrisches Getriebe bekannt.

Die Aufgabe der Erfindung besteht darin, eine Antriebsvorrichtung für eine elektrifizierte Fahrzeugachse eines Fahrzeugs bereitzustellen, deren Ölversorgungssystem mit im Vergleich zum Stand der Technik reduziertem Bauteilaufwand herstellbar ist.

Die Aufgabe ist durch die Merkmale des Anspruches 1 gelöst. Bevorzugte Weiterbildungen der Erfindung sind in den Unteransprüchen offenbart.

Die Erfindung geht von einer Antriebsvorrichtung für eine elektrifizierte Fahrzeugachse eines Fahrzeugs aus, die eine Elektromaschine, ein Getriebe und ein Ölmodul aufweist. Das Ölmodul versorgt die Elektromaschine und das Getriebe mit Öl. Zudem ist die Elektromaschine, das Getriebe und das Ölmodul zu einer Baueinheit zusammengefügt. In der Baueinheit ist das Ölmodul an einer Fügeebene an das Getriebe geflanscht. Das Ölmodul versorgt über zumindest eine Versorgungsleitung die Elektromaschine und das Getriebe mit Öl. Gemäß dem kennzeichnenden Teil des Anspruches 1 ist die Versorgungsleitung nicht als ein separates Leitungselement verbaut, sondern vielmehr als ein Kanal ausgebildet, der in der Fügeebene zwischen dem Ölmodul und dem Getriebe verläuft. Der Kanal ist aus einem modulseitigen Kanalsegment und aus einem getriebeseitigen Kanalsegment aufgebaut. Die beiden Kanalsegmente begrenzen zusammen einen öldurchströmten Kanalquerschnitt.

In einer technischen Umsetzung weist das Ölmodul ein Modulgehäuse auf, an dem eine Pumpeneinheit, ein Wärmetauscher, ein Ölfilter und ein Öltank ausgebildet bzw. montiert sind. Diese sind Bestandteil eines Ölversorgungssystems, bei dem die Elektromaschine und/oder das Getriebe jeweils in einem Hydraulikkreis eingebunden sind, in dem Öl umgewälzt wird. Das Modulgehäuse sowie das Getriebegehäuse können als Metallgussteile ausgebildet sein. In diesem Fall kann das modulseitige Kanalsegment materialeinheitlich und/oder einstückig am Modulgehäuse angeformt sein. In gleicher Weise kann das getriebeseitige Kanalsegment materialeinheitlich und/oder einstückig am Getriebegehäuse angeformt sein.

Für die Funktionsfähigkeit des Ölversorgungssystem ist ein ausreichend großer Kanalquerschnitt des zwischen dem Modulgehäuse und dem Getriebegehäuse integrierten Kanals von Relevanz. Vor diesem Hintergrund kann das modulseitige Kanalsegment und/oder das getriebeseitige Kanalsegment einen mit Bezug auf die Fügeebene zurückgesetzten Kanalboden aufweisen, von dem Kanalwände in Richtung Fügeebene bis zu einer Kontaktfläche hochgezogen sind. Im Zusammenbauzustand können die einander zugewandten Kontaktflächen der Kanalsegmente in Dichtanlage sein. Die Dichtanlage kann weitgehend öldicht ausgelegt sein. Gegebenenfalls kann eine geringfügige Ölleckage zwischen den Kontaktflächen der Kanalsegmente erfolgen.

An der Fügeebene können eine insbesondere schalenförmige Modulgehäusewand und eine insbesondere schalenförmige Getriebegehäusewand einen Zwischenraum definieren, in dem der erfindungsgemäße Kanal verläuft. Die Modulgehäusewand und die Getriebegehäusewand können an der Fügeebene mit einer umlaufenden Flanschverbindung miteinander verbunden sein. An der Flanschverbindung sind Gehäuseflansche des Modulgehäuses und des Getriebegehäuses miteinander in Verbindung, gegebenenfalls unter Zwischenlage eines Dichtelements. Auf diese Weise kann der Zwischenraum hermetisch öldicht nach außen abgedichtet sein. Aus dem Kanal austretendes Leckageöl kann sich daher bodenseitig im Zwischenraum sammeln und von dort an einer Rückführstelle zum Ölmodul rückgeführt werden. Dadurch ist eine fertigungstechnisch aufwendige hermetische Öldichtung des Kanals nicht erforderlich.

In einer konkreten Ausführungsform kann eine Elektromaschinenversorgungsleitung von einer Pumpeneinheit des Ölmoduls bis zur Elektromaschine geführt sein. In der Elektromaschinenversorgungsleitung kann in gängiger Praxis ein Wärmetauscher und ein Ölfilter angeordnet sein. In diesem Fall kann die Elektromaschinenversorgungsleitung aufgeteilt sein in eine erste Teilleitung, die sich zwischen der Pumpeneinheit und dem Wärmetauschereinlass erstreckt, eine zweite Teilleitung, die sich zwischen dem Wärmetauscherauslass und dem Ölfiltereinlass erstreckt, und in eine dritte Teilleitung aufgeteilt sein, die sich zwischen dem Filterauslass und der Elektromaschine erstreckt. Der Wärmetauscher kann außenseitig an einer Modulgehäuse-Montagefläche befestigt sein. Demgegenüber kann der Ölfilter sowie die Pumpeneinheit in einem hohlzylindrischen Gehäuseabschnitt des Modulgehäuses angeordnet sein. Der Öltank kann ebenfalls materialeinheitlich und einstückig im Modulgehäuse ausgebildet sein.

Die obige erste Teilleitung kann als ein erfindungsgemäßer Kanal ausgebildet sein. Dieser kann an einer, in der Modulgehäusewand ausgebildeten Kanalöffnung in Strömungsverbindung mit dem gehäuseaußen positionierten Wärmetauschereinlass sein. Die zweite Teilleitung kann ebenfalls als Kanal ausgebildet sein. Dieser kann an einer, in der Modulgehäusewand befindlichen Kanalöffnung in Strömungsverbindung mit dem ebenfalls gehäuseaußen positionierten Wärmetauscherauslass sein. Ferner kann der (die zweite Teilleitung bildende) Kanal an einer weiteren Kanalöffnung in den Ölfilter münden.

In einer weiteren konkreten Ausführungsform kann eine Getriebeversorgungsleitung von der Pumpeneinheit bis zum Getriebe geführt sein. Die Getriebeversorgungsleitung kann zumindest teilweise als erfindungsgemäßer Kanal ausgeführt sein. Ferner kann die Pumpeneinheit als eine Mehrstufenpumpe mit gemeinsamer Antriebswelle ausgebildet sein, deren Stufen sowohl als Druckpumpe als auch als Saugpumpe arbeiten.

Nachfolgend ist ein Ausführungsbeispiel der Erfindung anhand der beigefügten Figuren beschrieben.

Es zeigen:
- Fig. 1: in einem Blockschaltdiagramm eine Antriebsvorrichtung für eine elektrifizierte Fahrzeugachse eines Fahrzeugs;
- Fig. 2: in einer perspektivischen Skizze die Antriebsvorrichtung;
- Fig. 3a und 3b: jeweils eine Modulgehäusewand (Fig. 3a) und eine damit zusammenwirkende Getriebegehäusewand (Fig. 3b);
- Fig. 4a und 4b: jeweils grobschematische Ansichten der Modulgehäusewand und der Getriebegehäusewand im Zusammenbaustand (Fig. 4a) und im auseinandergebauten Zustand (Fig. 4b).

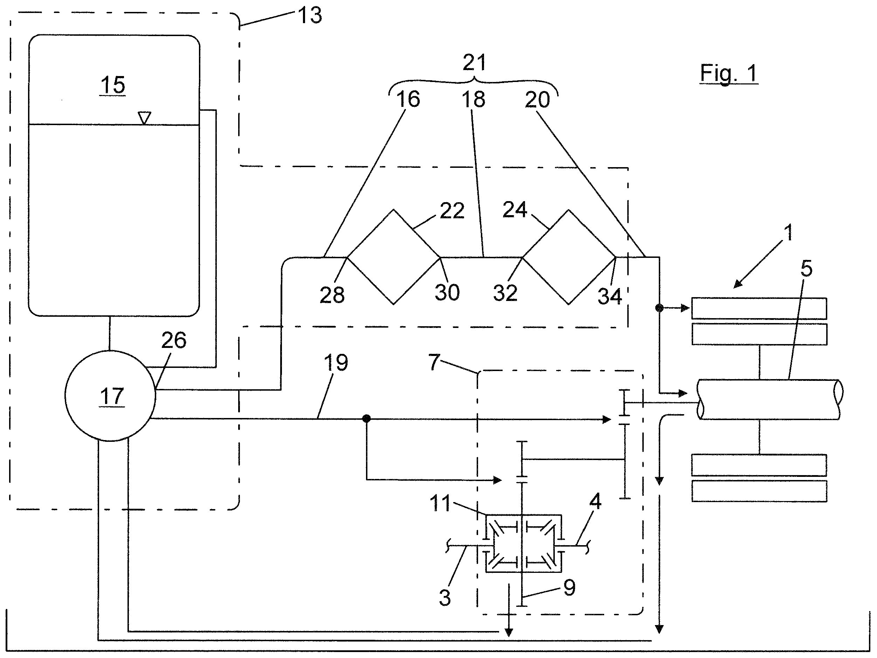

In der Figur 1 ist in einem vereinfachten Blockschaltdiagramm eine Antriebsvorrichtung für eine Fahrzeugachse eines zweispurigen Fahrzeugs gezeigt. Die Fahrzeugachse weist eine Elektromaschine 1 auf, die im Quereinbau achsparallel zu den, zu den Fahrzeugrädern geführten Antriebswellen 3, 4 angeordnet ist. Die Rotorwelle 5 der Elektromaschine 1 ist über ein Getriebe 7 in trieblicher Verbindung mit den beiden Antriebswellen 3, 4. In der Figur 1 weist das Getriebe 7 eine doppelte Stirnradstufe auf, die in trieblicher Verbindung mit einem eingangsseitigen Zahnrad 9 eines Achsdifferenzials 11 ist. Das Achsdifferenzial 11 treibt beidseitig auf die zu den Fahrzeugrädern geführten Antriebswellen 3, 4 ab. Zudem weist die Antriebsvorrichtung ein Ölmodul 13 auf, dessen Aufbau nachfolgend nur insoweit beschrieben ist, als es für das Verständnis der Erfindung erforderlich ist. Demzufolge weist das Ölmodul 13 einen Öltank 15 auf, der über eine Saugleitung mit einer Mehrstufenpumpe 17 verbunden ist. Von der Mehrstufenpumpe 17 führt eine Elektromaschinenversorgungsleitung 21 zur Elektromaschine EM, um diese mit Öl zu versorgen. Von der Elektromaschine EM wird Öl über eine Rückführleitung in Richtung Mehrstufenpumpe 17 abgesaugt. In der Elektromaschinenversorgungsleitung 21 ist ein Wärmetauscher 22 und ein Ölfilter 24 angeordnet, die ebenfalls Bestandteile des Ölmoduls 13 sind.

Wie aus der Figur 1 weiter hervorgeht, ist die Elektromaschinenversorgungsleitung 21 aufgeteilt in eine erste Teilleitung 16, eine zweite Teilleitung 18 und in eine dritte Teilleitung 20. Die erste Teilleitung 16 verbindet einen Pumpenauslass 26 mit einem Wärmetauschereinlass 28; die zweite Teilleitung 18 verbindet den Wärmetauscherauslass 30 mit dem Ölfiltereinlass 32, während die dritte Teilleitung 20 den Ölfilterauslass 34 mit der Elektromaschine 1 verbindet.

Zusätzlich führt eine Getriebeversorgungsleitung 19 von der Mehrstufenpumpe 17 zum Getriebe 7. Über die Getriebeversorgungsleitung 19 wird Öl zu Zahneingriffsstellen des Getriebes 7 geführt. Das Öl tropft von den Zahneingriffsstellen ab, sammelt sich in einem Ölsumpf und wird von dort über eine weitere Rückführleitung in Richtung Mehrstufenpumpe 17 abgesaugt.

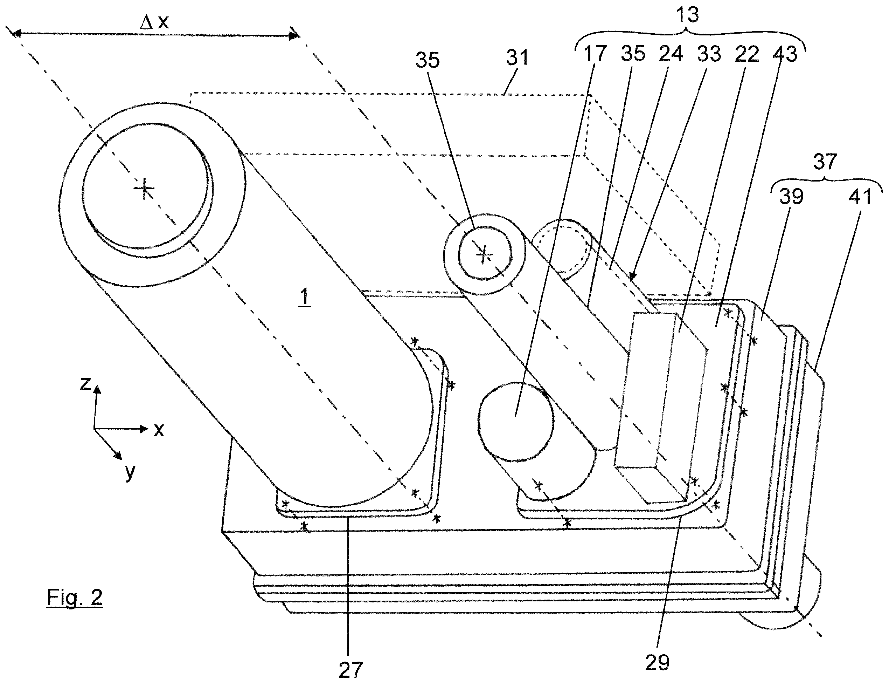

In der Figur 2 sind die Elektromaschine 1, das Getriebe 7 und das Ölmodul 13 zu einer Baueinheit zusammengefügt. In der Baueinheit sind die Elektromaschine 1 und das Ölmodul 13 achsparallel angeordnet sowie zueinander über einen Axialabstand Δx beabstandet. Zudem sind die Elektromaschine 1 und das Ölmodul 13 über Flanschverbindungen 27, 29 am Getriebe 7 angeflanscht. Der Elektromaschine 1 ist eine (mit gepunkteter Linie angedeutete) Leistungselektronik 31 zugeordnet. Diese befindet sich auf der Oberseite der Baueinheit.

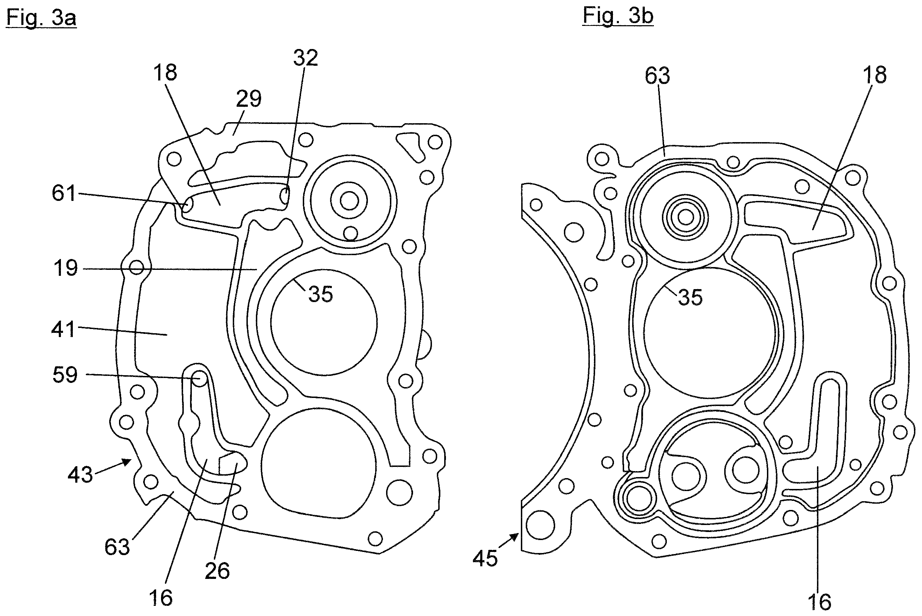

Das Ölmodul 13 weist in der Figur 2 oder 3 ein Modulgehäuse 33 auf, das als ein Gussbauteil ausgeführt ist, an dem die Mehrstufenpumpe 17, der Wärmetauscher 22 und der Ölfilter 24 montiert sind. Der Öltank 15 ist im Modulgehäuse 33 als ein nicht gezeigter Ringraum integriert, der eine Wellendurchführung 35 im Modulgehäuse 33 begrenzt. Durch die Wellendurchführung 35 ist eine nicht gezeigte Antriebswelle 3, 4 vom Getriebe 7 zu einem der Fahrzeugräder geführt.

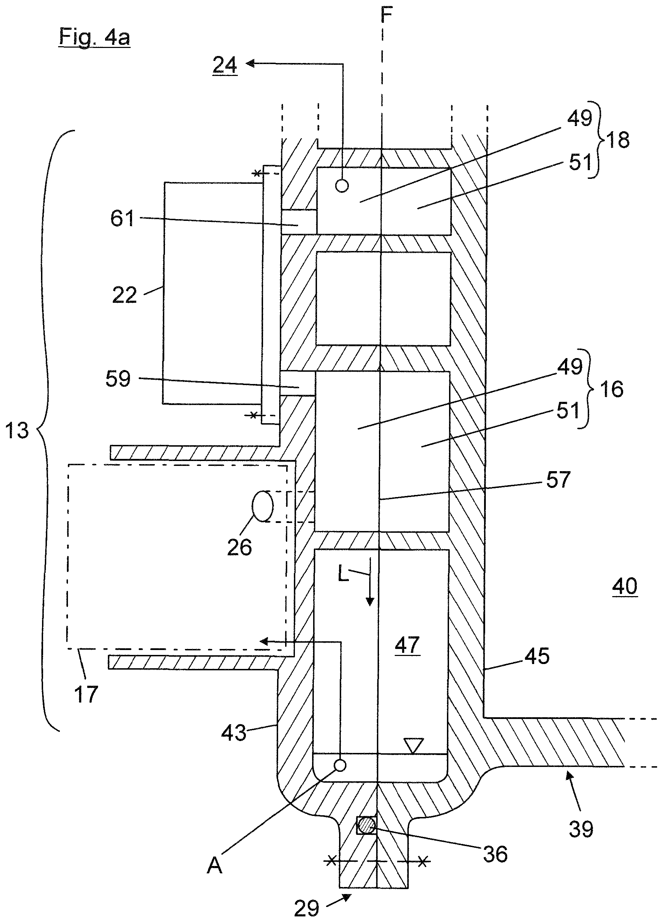

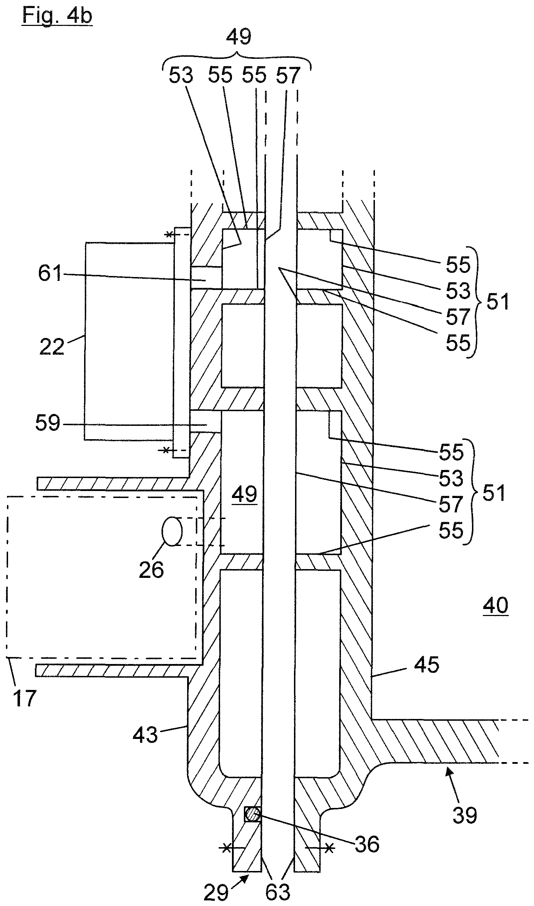

Gemäß der Figur 2 ist das Getriebegehäuse 37 zweiteilig aufgebaut mit einem Zwischengehäuse 39 und einem Gehäusedeckel 41. Das Zwischengehäuse 39 ist in Axialrichtung zwischen dem Modulgehäuse 33 und dem Gehäusedeckel 41 positioniert. An einer Fügeebene F (Figur 4a) ist das Modulgehäuse 33 mit einer schalenförmigen Modulgehäusewand 43 in Flanschverbindung 29 mit einer ebenfalls schalenförmigen Getriebegehäusewand 45 des Zwischengehäuses 39, in dessen Innenraum 40 die in der Figur 1 gezeigten Getriebekomponenten angeordnet sind. Zwischen der Modulgehäusewand 43 und der Getriebegehäusewand 45 ist ein Zwischenraum 47 definiert, der mittels der umlaufenden Flanschverbindung 29 nach gehäuseaußen hermetisch öldicht abgedichtet ist. Beispielhaft ist in der Figur 4a ein Dichtelement 36 zwischen den Gehäuseflanschen der Flanschverbindung 29 angeordnet.

Ein Kern der Erfindung besteht darin, dass die Versorgungsleitungen 19, 21 zumindest teilweise als in der Fügeebene F zwischen Ölmodul 13 und Getriebe 7 verlaufende Kanäle ausgebildet sind. Jeder dieser Kanäle ist gemäß der Figuren 4a und 54b aus einem modulseitigen Kanalsegment 49 und aus einem getriebeseitigen Kanalsegment 51 aufgebaut. Die beiden Kanalsegmente 49, 51 begrenzen in der Figur 4a einen öldurchströmten Kanalquerschnitt. Zudem ist das modulseitige Kanalsegment 49 materialeinheitlich und einstückig an der Modulgehäusewand 43 angeformt, während das getriebeseitige Kanalsegment 51 materialeinheitlich und einstückig an der Getriebegehäusewand 45 angeformt ist.

Gemäß den Figuren 3a und 3b sind die ersten und zweiten Teilleitungen 16, 18 der Elektromaschinenversorgungsleitung 21 als solche Kanäle realisiert. In gleicher Weise ist auch die Getriebeversorgungsleitung 19 als Kanal realisiert.

Jedes der Kanalsegmente 49, 51 weist einen mit Bezug auf die Fügeebene F zurückgesetzten Kanalboden 53 auf, von dem Kanalwände 55 in Richtung Fügeebene F bis zu einer Kontaktfläche 57 hochgezogen sind. Im Zusammenbauzustand (Figur 4a) sind die Kontaktflächen 57 der beiden einander zugewandten Kanalsegmente 49, 51 zueinander in Dichtanlage. Beispielhaft ist in der Figur 4a der Verlauf der ersten Teilleitung 16 dargestellt. Demnach führt die erste Teilleitung 16 von dem Pumpenauslass 26 über die als Kanal ausgebildete erste Teilleitung 16 bis zu einer Kanalöffnung 59, die eine Strömungsverbindung mit dem Wärmetauschereingang 28 des außenseitig an der Modulgehäusewand 43 angeordneten Wärmetauschers 22 herstellt. Die zweite Teilleitung 18 ist gemäß der Figur 4a ebenfalls als Kanal ausgebildet, der an einer Kanalöffnung 61 in Strömungsverbindung mit dem Wärmetauscherauslass 30 ist und an einer weiteren Kanalöffnung (nicht gezeigt) in den Ölfilter 24 mündet.

Gemäß der Figur 4a sind die Kontaktflächen 57 der Kanalsegmente 49, 51 sowie die Kontaktflächen 63 der umlaufenden Flanschverbindung 29 in derselben Fügeebene F angeordnet.

Wie aus der Figur 4a hervorgeht, kann aus der, als Kanal realisierten Teilleitung 16 Leckageöl L austreten. Das aus dem Kanal austretende Leckageöl L kann sich bodenseitig im Zwischenraum 47 sammeln und wird von dort an einer Absaugstelle A in Richtung Ölmodul 13 rückgeführt.

### BEZUGSZEICHENLISTE:

- 1: Elektromaschine
- 3, 4: Antriebswellen
- 5: Rotorwelle
- 7: Getriebe
- 9: Eingangszahnrad
- 11: Achsdifferenzial
- 13: Ölmodul
- 15: Öltank
- 16: erste Teilleitung
- 17: Mehrfachpumpe
- 18: zweite Teilleitung
- 19: Getriebeversorgungsleitung
- 20: dritte Teilleitung
- 21: Elektromaschinenversorgungsleitung
- 26: Pumpenauslass
- 27: Flanschverbindung
- 28: Wärmetauschereinlass
- 29: Flanschverbindung
- 30: Wärmetauscherauslass
- 31: Leistungselektronik
- 32: Ölfiltereinlass
- 33: Modulgehäuse
- 34: Ölfilterauslass
- 36: Dichtelement
- 37: Getriebegehäuse
- 39: Zwischengehäuse
- 40: Innenraum des Zwischengehäuses
- 41: Gehäusedeckel
- 43: Modulgehäusewand
- 45: Getriebegehäusewand
- 47: Zwischenraum
- 49: modulseitiges Kanalsegment
- 51: gehäuseseitiges Kanalsegment
- 53: Kanalboden
- 55: Kanalwände
- 57: Kontaktfläche
- 59, 61: Kanalöffnungen
- 63: Kontaktflächen der Flanschverbindung 29
- A: Absaugstelle
- F: Fügeebene
- L: Leckageöl
- Δx: Axialabstand

## Patentansprüche

1. Antriebsvorrichtung für eine elektrifizierte Fahrzeugachse eines Fahrzeugs, mit einer Elektromaschine (1), die über ein Getriebe (7) auf Antriebswellen (3, 4) abtreibt, die zu Fahrzeugrädern der Fahrzeugachse geführt sind, und mit einem Ölmodul (13), das die Elektromaschine (1) und/oder das Getriebe (7) mit Öl versorgt, wobei die Elektromaschine (1), das Getriebe (7) und das Ölmodul (13) zu einer Baueinheit zusammengefügt sind, in der das Ölmodul (13) an einer Fügeebene (F) an das Getriebe (7) geflanscht ist, wobei das Ölmodul (13) über zumindest eine Versorgungsleitung (19, 21) die Elektromaschine (1) und/oder das Getriebe (7) mit Öl versorgt, und das Öl von der Elektromaschine (1) und/oder vom Getriebe (7) über zumindest eine Rückführleitung zum Ölmodul (13) rückführbar ist,
**dadurch gekennzeichnet,**
**dass** die Versorgungsleitung (19, 21) und/oder die Rückführleitung zumindest teilweise als ein in der Fügeebene (F) zwischen Ölmodul (13) und Getriebe (7) verlaufender Kanal ausgebildet ist, der aus einem modulseitigen Kanalsegment (49) und aus einem getriebeseitigen Kanalsegment (51) aufgebaut ist, die zusammen einen öldurchströmten Kanalquerschnitt begrenzen.

2. Antriebsvorrichtung nach Anspruch 1, **dadurch gekennzeichnet, dass** das Ölmodul (13) ein Modulgehäuse (33) aufweist, an dem eine Pumpeneinheit (17), ein Wärmetauscher (22), ein Ölfilter (24) und/oder ein Öltank (15) ausgebildet bzw. montiert sind, und/oder dass das Modulgehäuse (33) sowie ein Getriebegehäuse (37) als Gussteile ausgebildet sind, und/oder dass insbesondere das modulseitige Kanalsegment (49) und das getriebeseitige Kanalsegment (51) materialeinheitlich und/oder einstückig jeweils am Modulgehäuse (33) und am Getriebegehäuse (37) angeformt sind.

3. Antriebsvorrichtung nach Anspruch 1 oder 2, **dadurch gekennzeichnet, dass** das modulseitige Kanalsegment (49) und/oder das getriebeseitige Kanalsegment (51) einen mit Bezug auf die Fügeebene (F) zurückgesetzten Kanalboden (53) aufweisen, von dem Kanalwände (55) in Richtung Fügeebene bis zu einer Kontaktfläche (57) hochgezogen sind, und/oder dass im Zusammenbauzustand Kontaktflächen (57) der Kanalsegmente (49, 51) in Dichtanlage sind.

4. Antriebsvorrichtung nach Anspruch 2 oder 3, **dadurch gekennzeichnet, dass** an der Fügeebene (F) eine insbesondere schalenförmige Modulgehäusewand (43) und eine insbesondere schalenförmige Getriebegehäusewand (45) einen Zwischenraum (47) definieren, in dem der Kanal verläuft, und dass die Modulgehäusewand (43) und die Getriebegehäusewand (45) mit einer umlaufenden Flanschverbindung (29) miteinander verbunden sind, die den Zwischenraum (47) öldicht nach außen abdichtet.

5. Antriebsvorrichtung nach Anspruch 4, **dadurch gekennzeichnet, dass** die Kontaktflächen (57) der Kanalsegmente (49, 51) und die Kontaktflächen (63) der Flanschverbindung (29) gemeinsam in der Fügeebene (F) liegen.

6. Antriebsvorrichtung nach Anspruch 4 oder 5, **dadurch gekennzeichnet, dass** aus dem Kanal austretendes Leckageöl (L) sich bodenseitig im Zwischenraum (47) sammelt und von dort über eine Rückführstelle (A) zum Ölmodul (13) rückführbar ist.

7. Antriebsvorrichtung nach einem der Ansprüche 2 bis 6, **dadurch gekennzeichnet, dass** eine Elektromaschinenversorgungsleitung (21) von der Pumpeneinheit (17) des Ölmoduls (13) zur Elektromaschine (1) geführt ist, und dass in der Elektromaschinenversorgungsleitung (21) der Wärmetauscher (22) und der Ölfilter (24) angeordnet ist, und dass insbesondere die Elektromaschinenversorgungsleitung (21) aufgeteilt ist in eine erste Teilleitung (16) zwischen der Pumpeneinheit (17) und dem Wärmetauschereingang (28), in eine zweite Teilleitung (18) zwischen dem Wärmetauscherausgang (30) und dem Ölfiltereingang (32), und/oder in eine dritte Teilleitung (20) zwischen dem Filterausgang (34) und der Elektromaschine (1), und/oder dass der Wärmetauscher (22) außenseitig am Modulgehäuse (33) angeordnet ist.

8. Antriebsvorrichtung nach Anspruch 7, **dadurch gekennzeichnet, dass** die erste Teilleitung (16) als Kanal ausgebildet ist, der an einer, in der Modulgehäusewand (43) ausgebildeten Kanalöffnung (59) in Strömungsverbindung mit dem Wärmetauschereingang (28) ist.

9. Antriebsvorrichtung nach Anspruch 7 oder 8, **dadurch gekennzeichnet, dass** die zweite Teilleitung (18) als Kanal ausgebildet ist, der an einer in der Modulgehäusewand (43) ausgebildeten Kanalöffnung (61) in Strömungsverbindung mit dem Wärmetauscherausgang (30) ist und an einer weiteren Kanalöffnung in den Ölfilter (24) mündet.

10. Antriebsvorrichtung nach einem der Ansprüche 2 bis 9, **dadurch gekennzeichnet, dass** eine Getriebeversorgungsleitung (19) von der Pumpeneinheit (17) bis zum Getriebe (7) geführt ist, und dass insbesondere die Getriebeversorgungsleitung (19) zumindest teilweise als Kanal ausgebildet ist, und/oder dass die Pumpeneinheit (17) als eine Mehrstufenpumpe mit gemeinsamer Antriebswelle ausgebildet ist, deren Stufen als Druckpumpe und als Saugpumpe arbeiten.

## Claims

1. Drive device for an electrified vehicle axle of a vehicle, with an electric machine (1), which outputs via a transmission (7) to drive shafts (3, 4), which are guided to vehicle wheels of the vehicle axle, and with an oil module (13), which supplies the electric machine (1) and/or the transmission (7) with oil, wherein the electric machine (1), the transmission (7) and the oil module (13) are combined to form a unit, in which the oil module (13) is flanged at a joining plane (F) onto the transmission (7), wherein the oil module (13) supplies the electric machine (1) and/or the transmission (7) with oil via at least one supply line (19, 21) and the oil can be returned from the electric machine (1) and/or from the transmission (7) via at least one return line to the oil module (13),
**characterized in that**
the supply line (19, 21) and/or the return line is at least partly configured as a channel extending in the joining plane (F) between the oil module (13) and transmission (7), which channel is constructed from a module-side channel segment (49) and a transmission-side channel segment (51), which together delimit channel cross-section through which oil flows.

2. Drive device according to claim 1, **characterized in that** the oil module (13) has a module housing (33), on which a pump unit (17), a heat exchanger (22), an oil filter (24) and/or an oil tank (15) are configured or mounted, and/or **in that** the module housing (33) and a transmission housing (37) are configured as cast parts, and/or **in that** in particular the module-side channel segment (49) and the transmission-side channel segment (51) are each formed from the same material and/or integrally on the module housing (33) and on the transmission housing (37).

3. Drive device according to claim 1 or 2, **characterized in that** the module-side channel segment (49) and/or the transmission-side channel segment (51) have a channel base (53) that is set back relative to the joining plane (F), from which channel base channel walls (55) rise up in the direction of a joining plane to a contact surface (57) and/or **in that** in the assembled state contact surfaces (57) of the channel segments (49, 51) are in sealing engagement.

4. Drive device according to claim 2 or 3, **characterized in that** at the joining plane (F) a module housing wall (43), which is shell-shaped in particular, and a transmission housing wall (45), which is shell-shaped in particular, define an intermediate space (47), in which the channel extends, and **in that** the module housing wall (43) and the transmission housing wall (45) are connected to one another by a circumferential flange connection (29), which seals off the intermediate space (47) from the outside in an oil-tight manner.

5. Drive device according to claim 4, **characterized in that** the contact surfaces (57) of the channel segments (49, 51) and the contact surfaces (63) of the flange connection (29) lie jointly in the joining plane (F).

6. Drive device according to claim 4 or 5, **characterized in that** leakage oil (L) exiting the channel collects on the bottom in the intermediate space (47) and can be returned from there via a return point (A) to the oil module (13).

7. Drive device according to any one of claims 2 to 6, **characterized in that** an electric machine supply line (21) is guided from the pump unit (17) of the oil module (13) to the electric machine (1), and **in that** the heat exchanger (22) and the oil filter (24) are arranged in the electric machine supply line (21), and **in that** in particular the electric machine supply line (21) is divided into a first partial line (16) between the pump unit (17) and the heat exchanger inlet (28), a second partial line (18) between the heat exchanger outlet (30) and the oil filter inlet (32), and/or a third partial line (20) between the filter outlet (34) and the electric machine (1), and/or **in that** the heat exchanger (22) is arranged on the outside of the module housing (33).

8. Drive device according to claim 7, **characterized in that** the first partial line (16) is configured as a channel which is in flow connection with the heat exchanger inlet (28) at a channel opening (59) formed in the module housing wall (43).

9. Drive device according to claim 7 or 8, **characterized in that** the second partial line (18) is configured as a channel, which is in flow connection with the heat exchanger outlet (30) at a channel opening (61) formed in the module housing wall (43) and opens into the oil filter (24) at a further channel opening.

10. Drive device according to any one of claims 2 to 9, **characterized in that** a transmission supply line (19) is guided from the pump unit (17) to the transmission (7), and **in that** in particular the transmission supply line (19) is configured at least partly as a channel, and/or **in that** the pump unit (17) is configured as a multi-stage pump with a common drive shaft, the stages of which operate as a pressure pump and as a suction pump.

## Revendications

1. Dispositif d'entraînement pour un essieu de véhicule électrifié d'un véhicule, avec une machine électrique (1) qui dévie, par l'intermédiaire d'une transmission (7), vers des arbres d'entraînement (3, 4) qui sont guidés vers des roues de véhicule de l'essieu de véhicule, et avec un module d'huile (13) qui alimente en huile la machine électrique (1) et/ou la transmission (7), dans lequel la machine électrique (1), la transmission (7) et le module d'huile (13) sont assemblés en une unité de construction dans laquelle le module d'huile (13) est bridé sur la transmission (7) au niveau d'un plan de jonction (F), dans lequel le module d'huile (13) alimente en huile la machine électrique (1) et/ou la transmission (7) par l'intermédiaire d'au moins une conduite d'alimentation (19, 21) et l'huile provenant de la machine électrique (1) et/ou de la transmission (7) peut être renvoyée vers le module d'huile (13) par l'intermédiaire d'au moins une conduite de retour,
**caractérisé en ce que**
la conduite d'alimentation (19, 21) et/ou la conduite de retour est au moins partiellement conçue comme un canal s'étendant dans le plan de jonction (F) entre le module d'huile (13) et la transmission (7), canal qui est constitué d'un segment de canal côté module (49) et d'un segment de canal côté transmission (51), qui délimitent ensemble une section transversale de canal traversée par l'huile.

2. Dispositif d'entraînement selon la revendication 1, **caractérisé en ce que** le module d'huile (13) présente un boîtier de module (33) au niveau duquel une unité de pompage (17), un échangeur de chaleur (22), un filtre à huile (24) et/ou un réservoir d'huile (15) sont formés ou montés, et/ou **en ce que** le boîtier de module (33) ainsi qu'un carter de transmission (37) sont formés en tant que pièces moulées, et/ou **en ce que** en particulier le segment de canal côté module (49) et le segment de canal côté transmission (51) sont formés d'un matériau uniforme et/ou d'un seul tenant respectivement au niveau du boîtier de module (33) et du carter de transmission (37).

3. Dispositif d'entraînement selon la revendication 1 ou 2, **caractérisé en ce que** le segment de canal côté module (49) et/ou le segment de canal côté transmission (51) présentent un fond de canal (53) en retrait par rapport au plan de jonction (F), fond à partir duquel des parois de canal (55) s'élèvent en direction du plan de jonction jusqu'à une surface de contact (57), et/ou **en ce que**, à l'état assemblé, les surfaces de contact (57) des segments de canal (49, 51) sont en appui étanche.

4. Dispositif d'entraînement selon la revendication 2 ou 3, **caractérisé en ce qu'au** niveau du plan de jonction (F), une paroi de boîtier de module (43) en particulier en forme de coque et une paroi de carter de transmission (45) en particulier en forme de coque définissent un espace intermédiaire (47) dans lequel le canal s'étend, et **en ce que** la paroi de boîtier de module (43) et la paroi de carter de transmission (45) sont reliées entre elles avec un raccord à bride périphérique (29) qui assure une étanchéité à l'huile de l'espace intermédiaire (47) vers l'extérieur.

5. Dispositif d'entraînement selon la revendication 4, **caractérisé en ce que** les surfaces de contact (57) des segments de canal (49, 51) et les surfaces de contact (63) du raccord à bride (29) se situent ensemble dans le plan de jonction (F).

6. Dispositif d'entraînement selon la revendication 4 ou 5, **caractérisé en ce que** l'huile de fuite (L) s'échappant du canal s'accumule au fond de l'espace intermédiaire (47) et peut être renvoyée à partir de là vers le module d'huile (13) par l'intermédiaire d'un point de retour (A).

7. Dispositif d'entraînement selon l'une quelconque des revendications 2 à 6, **caractérisé en ce qu'une** conduite d'alimentation de machine électrique (21) est acheminée de l'unité de pompage (17) du module d'huile (13) vers la machine électrique (1), et **en ce que** l'échangeur de chaleur (22) et le filtre à huile (24) sont disposés dans la conduite d'alimentation de machine électrique (21) et **en ce que** en particulier la conduite d'alimentation de machine électrique (21) est répartie en une première conduite partielle (16) entre l'unité de pompage (17) et l'entrée d'échangeur de chaleur (28), en une deuxième conduite partielle (18) entre la sortie d'échangeur de chaleur (30) et l'entrée de filtre à huile (32), et/ou en une troisième conduite partielle (20) entre la sortie de filtre (34) et la machine électrique (1), et/ou **en ce que** l'échangeur de chaleur (22) est disposé à l'extérieur au niveau du boîtier de module (33).

8. Dispositif d'entraînement selon la revendication 7, **caractérisé en ce que** la première conduite partielle (16) est conçue en tant que canal qui est en liaison d'écoulement avec l'entrée d'échangeur de chaleur (28) au niveau d'une ouverture de canal (59) formée dans la paroi de boîtier de module (43).

9. Dispositif d'entraînement selon la revendication 7 ou 8, **caractérisé en ce que** la deuxième conduite partielle (18) est conçue en tant que canal qui est en liaison d'écoulement avec la sortie d'échangeur de chaleur (30) au niveau d'une ouverture de canal (61) formée dans la paroi de boîtier de module (43) et débouche dans le filtre à huile (24) au niveau d'une ouverture de canal supplémentaire.

10. Dispositif d'entraînement selon l'une quelconque des revendications 2 à 9, **caractérisé en ce qu'**une conduite d'alimentation de transmission (19) est guidée de l'unité de pompage (17) jusqu'à la transmission (7), et **en ce que** en particulier la conduite d'alimentation de transmission (19) est conçue au moins partiellement en tant que canal, et/ou **en ce que** l'unité de pompage (17) est conçue en tant que pompe à plusieurs niveaux avec arbre d'entraînement commun, dont les niveaux fonctionnent en tant que pompe de pression et en tant que pompe d'aspiration.
